# EUROPEAN PATENT APPLICATION

(11) **EP 3 273 082 A1**
(43) Date of publication of application: **24.01.2018**
(21) Application number: 17181606.9
(22) Date of filing: 17.07.2017
(51) Int. Cl.: F16D 9/06

(54) **A SHEAR BOLT COUPLING OF A PTO SHAFT WITH PRE-DEFINED NOMINAL TORQUE VALUES**

(30) Priority: 18.07.2016 SI 201600173
(71) Applicant: Cerjak D.o.o., 8273 Leskovec pri Krskem (SI)
(72) Inventor: Cerjak, Matjaz, 8263 Cerklje ob Krki (SI); Konecnik, Stanislav, 3257 Podsreda (SI)
(74) Representative: Flak, Antonija

(57) **Abstract**

The present invention belongs to the field of PTO shafts, more specifically it relates to safety elements and clutches of PTO shafts.

The characteristic of the shear bolt coupling of the PTO shaft with pre-defined nominal torque values in in that the shape of a symmetrical bottom part of yoke and the shape of a flat part of an attachment correspond, wherein three circular holes with different diameters located on the bottom part of the yoke are positioned co-axially with three circular holes with corresponding diameters on the flat part of the attachment. A shear bolt with a nut is mounted in one matching pair of holes, while caps are inserted into other two pairs of holes. The pre-defined nominal torque value of the coupling is selected by the diameter and the position of the pair of holes, into which the shear bolt and the nut will be mounted, wherein the torque value is marked with an imprinted symbol located in the proximity of each circular hole. The bottom part of the yoke and the flat part of the attachment may have more than three co-axial holes.

## Description

### Field of the invention

The present invention belongs to the field of PTO shafts, more specifically it relates to safety elements and couplings for PTO shafts.

### The technical problem

The technical problem is a constructional solution of a shear bolt coupling, which has to enable possible use of a safety element at several different nominal torque values, while it should, at the same time, allow ergonomic and user-friendly replacement of bolts, as well as preventing not-intended use of a safety element after each modification of the coupling nominal torque value.

It is the aim of the invention to provide a solution of a coupling system that will enable several different nominal torque values with a simple replacement of shear bolts and with minimal vibration or shaking of the PTO shaft.

### State of the art

Patent US 6691844 B2 discloses a drive assembly, which has a hub that supports a toothed ring as a part of a locking system intended to increase safety in the working area of the PTO shaft. The solution is functionally different from the present invention as it does not comprise a locking system, while at the same time enables the user simple replacement of bolts. In addition, the present invention allows choice between several values of the coupling nominal torque, thus increasing the area of use thereof.

Patent GB 1567087 discloses a solution in which the torques transfer is enabled with a shear bolt, which is sheared when the nominal torque is increased. The present invention includes a shear bolt in such a way that it enables choice between at least three nominal torque values, which are explicitly marked, the user can easily replace bolts, while the solution according to the present invention also has a symmetrical shape of the main axis, which strongly decreases possibility of vibration/shaking of the PTO shaft.

The invention described in patent US 4758109 is based on an increased safety of the user, because the shear bolt is disposed in a T-shaped slot and in case of bolt being damaged, its parts do not fly around, while at the same time its shape encourages use of a bolt of a proper size. The present invention differs significantly from this solution, since it enables a choice of several different nominal torques values of the coupling and also enables easier replacement of the shear bolt in a working environment.

Patent JP 2001132770 describes a solution, which has a flange with 4 holes having different diameters that enable variation and precise setting of nominal torque of the coupling. The present invention differs from the solution in JP 2001132770 in that a choice of at least three nominal torque values is possible and in addition, the use is made easier as values are written in the proximity of holes. Caps are inserted into non-occupied bores, which protect the factory settings and improves replacement of the shear bolt.

In patent SU647474 a solution is described that has only one nominal torque value, which cannot be altered. In this solution the head of the shear bolt is placed in a T-shaped slot on a first flange, then continues through a second flange and is screwed with a nut on the end of the flange. On the contrary, the present invention enables selection of three or more different nominal torque values.

### Description of the solution of the technical problem

The characteristic of the shear bolt coupling of the PTO shaft with pre-defined nominal torque values in in that the shape of a symmetrical bottom part of a yoke and the shape of a flat part of an attachment correspond, wherein three circular holes with different diameters located on the bottom part of the yoke are positioned co-axially with three circular holes with corresponding diameters on the flat part of the attachment. A shear bolt with a nut is mounted in one matching pair of holes, while caps are inserted into other two pairs of holes. The pre-defined nominal torque value of the coupling is selected by the diameter and the position of the pair of holes, into which the shear bolt and the nut will be mounted, wherein the torque value is marked with an imprinted symbol located in the proximity of each hole. The bottom part of the yoke and the flat part of the attachment may have more than three co-axial holes. The constructional solution enables reliable, safe and user-friendly replacement of shear bolts that may be due to changing the nominal torque value or due to replacement of a sheared bolt. The caps have an important role as their geometrical shape functions as a protection of factory settings of the shear bolt coupling and at the same time prevents non-intended use of the shear bolt coupling.

The shear bolt coupling of the PTO shaft with pre-defined nominal torque values according to the invention will be described in further detail based on figures, which show:
- Figure 1: shear bolt coupling assembly
- Figure 2: shear bolt coupling assembly
- Figure 2a: grooves shown in detail
- Figure 2b: grooves shown in detail
- Figure 3a: elevation view of the cap
- Figure 3b: cross-section C - C
- Figure 3c: cap
- Figure 4: ground plan view of yoke 1

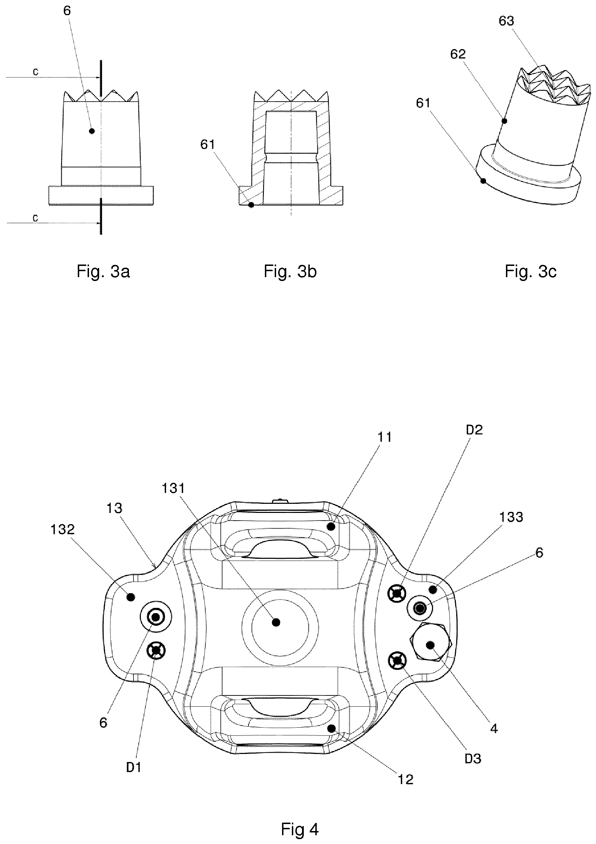

The shear bolt coupling of the PTO shaft with pre-defined nominal torque values according to the invention comprises a yoke 1 and an attachment 2, which are through a circlip 3 with a shear bolt 4 and a nut 41 connected into a whole. The yoke 1 has an approximate shape of the letter U with legs 11 and 12, which have in their upper part circular openings 111 and 121. As shown in figure 4 the bottom part 13 of the yoke 1 has a symmetrical shape with regards to the X and Y axis. In the middle of the bottom part 13 of the yoke 1 a hole 131 is provided, which is surrounded with fixed parts of legs 11 and 12. Left and right of the legs 11 and 12 are flanges 132 and 133 of the part 13. The flange 132 has a circular hole 14 with a diameter d₁, and an imprinted symbol D1, which corresponds to the torque value of the hole d1 of the shear bolt coupling. The flange 133 has a hole 15 with a diameter d₂ and in its proximity an imprinted symbol D2, which corresponds to a second torque value of the shear bolt coupling. The flange 133 also has a hole 16 with a diameter d₃ and in its proximity an imprinted symbol D3, which corresponds to the third torque value of the shear bolt coupling.

The flanges 132 and 133 of the bottom part 13 can have more circular holes with diameters d₁, d₂, d₃, d₄..., with corresponding imprinted symbols, which corresponds to torque values of holes d₁, d₂, d₃, d₄..., of the shear bolt coupling.

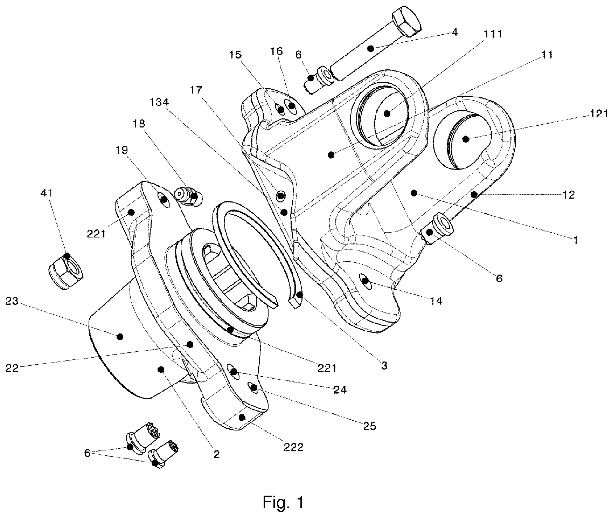

The bottom part 13 of the yoke 1 has a groove 134 on one side, where a circular hole 17 for installation of a lubrication device 18 is located (figures 1 and 5). The interior of the circular hole 131 is provided with a deepened groove 131' for installation of the circlip 3, which is on the other side installed into a groove 211 of the attachment 2.

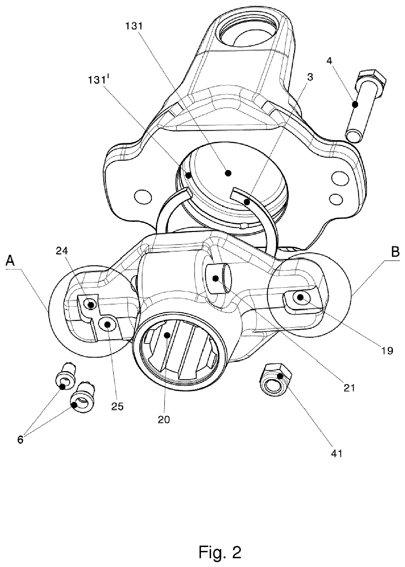

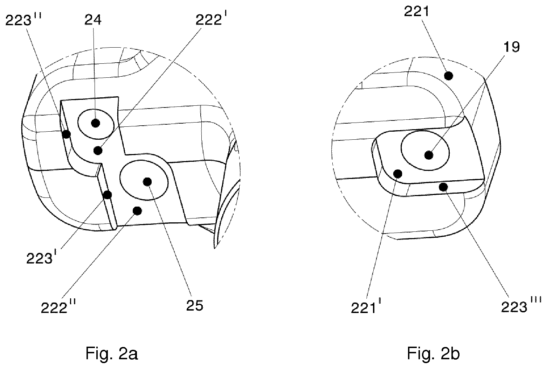

The attachment 2 has a cylindrical accessory 21 with a groove 211, a plate 22 and a cylindrical accessory 23. A toothed bore 20 is provided through all three parts along the interior axis that has on one side a bore into which a safety pin or safety bolt 21 is installed as shown in figure 6. The plate 22 has the same shape as the bottom part 13 of the yoke 1, of which the bottom surface tightly fits to the upper surface of the plate 22. In the bottom surface of the plate 22 the flange 221 has a recess 221' with a circular hole 19. In the bottom surface of the plate 22 the flange 222 has a recess 222' with a circular hole 222a and a recess 222" with a circular hole 222b (figure 2). The shape of recesses 221', 222' in 222" is dimensioned so that after the nut 41 for tightening the shear bolt 4 is mounted, the nut 41 remains trapped in the walls of recesses 223', 223" and 223"'.

According to the invention each bore with a diameter d₁, d₂, d₃,..., through the bottom part 13 of the yoke 1, has a matching bore with a diameter d₁', d₂', d₃',..., through the plate 22 of the attachment 2. Corresponding bores d₁, d₂, d₃,..., are distributed through the bottom part 13 of the yoke 1 in such a way that the bolt 4 cannot be inserted into more than one pair of bores d₁', d₂', d₃',..., through the plate 22 of the attachment 2.

The shear bolt coupling according to the invention allows setting of several different nominal torques values of the clutch, but it simultaneously only operates at one selected torque value. This is enabled with the selection of bore diameter on the bottom part 13 of the yoke 1, which is inseparably connected with the attachment 2 through the circlip 3 and co-axial bores through the part 13 and the plate 22. The shear bolt 4 is installed through a pair of matching bores in the yoke 1 and the attachment 2 and is held in place with the nut 41. Caps 6 are inserted into holes of the bottom part 13 of the yoke 1 and the attachment 2, which are not occupied by the shear bolt 4, the caps preventing non-intended wrong bolt replacement so that it would be placed into an incorrect pair of bores d₁-d₁'; d₂-d₂'; d₃-d₃',.... That would consequently lead to use of an erroneous torque. Additionally, the caps protect the factory settings of the shear bolt coupling. The lubrication device 18, which is installed in the bore 17 on the grove 134, enables lubrication of parts that rotate with respect to each other. The shear bolt coupling with rounded edges has a symmetrical shape with regards to the pivot of the coupling, which results in smaller differences in eccentric masses and thereby decreases the load on the drive due to eccentric masses or vibrations.

Each pair of the matching bores corresponds only in one position, in which the bores are co-axial. Co-axial nature of matching bores can be achieved by rotating the yoke 1 around the rotation axis with regards to the attachment 2. In one embodiment of the shear bolt coupling showed in figure 1, the hole 16 on the bottom part 13 of the yoke 1 is co-axial with the circular hole 19 on the attachment 2.

Each coupling is equipped with nominal torque values shown besides the holes in the bottom part 13 of the yoke 1. In the embodiment according to figure 1, the nominal torque values are marked with D1, D2 and D3. These marked values give the user information to which torque value the coupling is set.

The attachment 2 has a toothed bore 20, while a safety pin or a safety bolt is inserted from the side into the bore 21. The bore 20 enables connection of the attachment 2 and the whole PTO shaft onto the working machine, while the safety pin or the safety bolt prevent axial movements of the attachment 2 and the whole PTO shaft. Recesses 221', 222' and 222" on plate 22 of the attachment allow the user to use less effort to replace the bolt or to screw the bolt 4 and the nut 41, respectively, in a working environment. In addition, the recesses 221', 222', 222" and surfaces 223', 223", 223"' serve as a block of the nut or the bolt during screwing the bolt 4 and the nut 41 and improve the ergonomics of the shear bolt coupling, respectively. When the bolt 4 is replaced in any of the matching pairs of circular holes, the nut 41 is mounted in a recess around the selected circular hole, wherein the shear bolt 4 is inserted into the selected hole and is screwed into the nut 41. The nut 41 is without significant efforts retained in the selected recess.

The shear bolt 4 and the nut 41 represent a releasable screw connection, which performs the function of torque transfer. In case the nominal torque value is exceeded, the bolt 4 is sheared and has to be replaced.

During operation of the shear bolt coupling the bolt 4 occupies only two matching bores, namely a hole in the yoke 1 and its corresponding hole in the attachment 2, the holes corresponding to the factory set nominal torque value of the coupling. Suitable caps 6 are inserted into all other bores on the yoke 1 and the attachment 2. The basic function of the caps is that they protect the factory settings of the shear bolt coupling or serve as an indicator showing changes in the factory settings, respectively. As shown in figure 3, the cap 6 has a shape of a hollow cone with a bottom part 61, a stem 62 and an ending 63. The stem 62 diameter decreases towards the ending 63, while the bottom part 61 has a slightly larger diameter as the beginning of the stem 62. The caps 6 can be removed from the bores with a specific force applied to the surface of the bottom part 61 of the cap 6 or to the surface 63 of the cap 6, the surface having a plurality of triangularly shaped bulges. If a user tries to remove the cap 6 with a force applied to the surface 61, the bottom part 61 is broken, while in case the user tries to remove the cap 6 by applying force to the surface 63, the triangularly shape bulges 63 are damaged. A damage or deformation of the ending 63 is an indicator that the factory settings have been tempered with. By using caps 6 non-intentional use of the shear bolt coupling is prevented or minimized, wherein the shape of caps 6 is such that it senses any interference with the factory settings of the shear bolt coupling. Size of caps is adapted to the size of holes 14, 15, 16, 19, 24, 25 into which the caps 6 are inserted. The inserted caps 6 also protect the holes from dirt coming from the exterior.

The constructional solution of the shear bolt coupling according to the invention enables operation of the shear bolt coupling at several different nominal torque values. It also enables simple assembly and disassembly of the screw connection in case of a sheared bolt or in case of the nominal torque value change. The caps inserted into bores intended to transfer the torque through the shear bolt, are provided to protect the factory settings of the coupling and also prevent non-intended uses of the shear bolt coupling.

## Claims

1. A shear bolt coupling for/of a PTO shaft with pre-defined nominal torque value, **characterized in that** the shape of a symmetrical bottom part of a yoke and the shape of a flat part of an attachment correspond, wherein circular holes with different diameters located on the bottom part of the yoke are positioned co-axially with circular holes with corresponding diameters on the flat part of the attachment; that a shear bolt with a nut is mounted in one matching pair of holes, while caps are inserted into other pairs of holes; that the pre-defined nominal torque value of the coupling is selected by the diameter and the position of the pair of holes, into which the shear bolt and the nut will be mounted.

2. The shear bolt coupling of a PTO shaft according to claim 1, **characterized in that** it comprises a yoke (1) and an attachment (2), which are through a circlip (3) connected into a whole with a shear bolt (4) and a nut (41); that the yoke (1) has an approximate shape of a large letter U with legs (11 and 12), which have in their upper part circular openings (111 and 121); that a bottom part (13) of the yoke (1) has a symmetrical shape with regards to X and Y axis; that a circular hole (131) is provided in the centre of the bottom part (13) of the yoke (1), the hole (131) being surrounded with fixed part of legs (11 and 12); that flanges (132 and 133) of the part (13) are provided left and right from the legs (11 and 12); that the flange (132) has a circular hole (14) with a diameter d₁, and an imprinted symbol (D1), which corresponds to the torque value of the hole d1 of the shear bolt coupling; that the flange (133) has a circular hole (15) with a diameter d₂ and in its proximity an imprinted symbol (D2), which corresponds to the second torque value of the shear bolt coupling; that the flange (133) as a hole (16) with a diameter d₃ and in its proximity an imprinted symbol (D3), which corresponds to the third torque value of the shear coupling; that the attachment (2) has a cylindrical accessory (21) with a groove (211), a plate (22) and a cylindrical accessory (23); that through all three parts along the interior axis a toothed bore (20) is provided, the bore having a hole into which a safety pin or a safety bolt (21) is mounted; that the plate (22) has the same shape as the bottom part (13) of the yoke (1), the surface of the latter tightly fits to the upper surface of the plate (22); that in the bottom surface of the plate (22) a flange (221) has a recess (221') in which a circular hole (19) is provided; that in the bottom surface of the plate (22) a flange (222) has a recess (222') with a circular hole (24) and a recess (222") with a circular hole (25); that the recesses (221', 222' in 222") are dimensioned so that after the nut (41) for tightening the shear bolt (4) is mounted, the nut (41) remains trapped in the walls of recesses (223', 223" and 223"').

3. The shear bolt coupling of a PTO shaft according to claims 1 and 2, **characterized in that** each bore with a diameter d₁, d₂, d₃,..., through the bottom part (13) of the yoke (1), has a corresponding hole with a diameter d₁', d₂', d₃',..., through the plate (22) of the attachment (2).

4. The shear bolt coupling of a PTO shaft according to any of the claims from 1 to 3, **characterized in that** the shear bolt (4) is mounted through a pair of matching holes in the yoke (1) and the attachment (2), and fastened with a nut (41), wherein caps (6) are inserted into the holes of the bottom part (13) of the yoke (1) and the attachment (2) not occupied by the shear bolt (4).

5. The shear bolt coupling of a PTO shaft according to any of the claims from 1 to 4, **characterized in that** the shape of caps (6) is such that it senses any interference in factory settings of the shear bolt coupling can be sensed.
